# EUROPÄISCHE PATENTANMELDUNG

(11) **EP 1 530 225 A2**
(43) Veröffentlichungstag der Anmeldung: **11.05.2005**
(21) Anmeldenummer: 04026036.6
(22) Anmeldetag: 03.11.2004
(51) Int. Cl.: H01F 5/02, H01F 27/02

(54) **Elektrische Spulenanordnung**

(30) Priorität: 06.11.2003 EP 03025492
(71) Anmelder: Tyco Electronics Belgium EC N.V., 8020 Oostkamp (BE); Bayerische Motoren Werke Aktiengesellschaft, 80788 München (DE)
(72) Erfinder: De Brauwer Hans, 8340 Damme (BE); Kerckhof Bart, 8210 Zedelgern (BE); Bürgel Dr. Robert, 80689 München (DE); Hadaller Josef, 84098 Hohentannen (DE); Meyer Johannes, 85757 Karlsfeld (DE)
(74) Vertreter: Klunker . Schmitt-Nilson . Hirsch

(57) **Zusammenfassung**

Die Erfindung betrifft eine elektrische Spulenanordnung. Die Spulenanordnung umfasst eine Spuleneinheit mit einem in seiner Grundform rechteckkastenförmigen Spulenträger und mit einer auf dem Außenumfang des Spulenträgers (15) befindlichen Spulenwicklung (13). Ein Spulengehäuse (23; 59) ist mit einer Aufnahmemulde versehen, welche die Spuleneinheit in solcher Tiefe aufnimmt, dass zwischen einer Oberseite der Aufnahmenmulde und einer Oberseite der Spulenwicklung (13) ein Freiraum bleibt. Der Freiraum ist mit einer Vergussmasse (25) mindestens bis zu einer solchen Füllhöhe ausgefüllt, dass die Oberseite der Spulenwicklung (13) mit Vergussmasse (25) bedeckt ist.

Der Außenumfang des Spulenträgers (15) ist an seinen Eckpunkten je mit einem Abrundungselement (27) versehen, das sich mindestens über die Vergussmassenfüllhöhe erstreckt und eine außenseitige Rundungskrümmung solcher Größe aufweist, dass von den Eckpunkten des Spulenträgers (15) ausgehende Spannungsrisse in der Vergussmasse (25) vermieden werden.

## Beschreibung

Die Erfindung betrifft eine Spulenanordnung. Diese umfasst eine Spuleneinheit mit einem in seiner Grundform rechteckkastenförmigen Spulenträger und mit einer auf dem Außenumfang des Spulenträgers befindlichen Spulenwicklung. Die Spulenanordnung besitzt außerdem ein Spulengehäuse mit einer Aufnahmemulde, welche die Spuleneinheit in solcher Tiefe aufnimmt, dass zwischen einer Oberseite des Spulengehäuses und einer Oberseite der Spulenwicklung ein Freiraum bleibt. Der Freiraum ist mindestens bis zu einer solchen Füllhöhe mit Vergussmasse aufgefüllt, dass die Oberseite der Spulenwicklung mit Vergussmasse bedeckt ist.

Eine derartige Spulenanordnung kommt beispielsweise für einen elektrischen Ventiltrieb zur elektromagnetischen Ventilsteuerung eines Verbrennungsmotors zum Einsatz.

Elektromagnetische Betätigungsvorrichtungen für Verbrennungsmotor-Hubventile sind bekannt aus der JP-A-2000-179317 und aus der EP-B-0796981**.** Die Betätigungsvorrichtung der erstgenannten Druckschrift umfasst eine zylinderförmige elektromagnetische Spule mit einem zylinderförmigen Innenjoch, einer auf das Innenjoch gewickelten Spulenwicklung und mit einem zylinderförmigen Außenjoch, welches das gewickelte Innenjoch aufnimmt. Die aus der zweitgenannten Druckschrift bekannte Betätigungsvorrichtung enthält eine elektromagnetische Spule mit einem rechteckförmigen Spulenkern und einer auf diesen Kern gewickelten Spulenwicklung mit Rechteckform.

Aus der DE-A-10202476 ist eine elektromagnetische Spule als Betätigungsvorrichtung für Verbrennungsmotor-Hubventile bekannt, die eine Spuleneinheit mit einem Spulenträger, einer auf den Außenumfang des Spulenträgers gewickelte Spulenwicklung und einen im Innenraum des Spulenträgers befindlichen Spulenkern aufweist. Diese Spuleneinheit ist in einer Aufnahmemulde eines Spulengehäuses untergebracht. Zwischenräume zwischen den einzelnen Wicklungsdrahtlagen der Spulenwicklung, zwischen dem Spulenträger und dem Spulenkern sowie zwischen der Spuleneinheit und dem Spulengehäuse sind mit einer Vergussmasse hoher Wärmeleitfähigkeit ausgefüllt. Damit wird die gesamte die Wärmeleitung behindernde Luft aus der Spuleneinheit entfernt und wird die Ableitung der in dem Wicklungsdraht entstehenden Wärme verbessert.

Für Spulenanordnungen zur Betätigung von Verbrennungsmotor-Hubventilen steht nur ein äußerst geringer Platz zur Verfügung. Dies auch unter dem Gesichtspunkt, dass pro Ventil zwei Spulenanordnungen benötigt werden und dass moderne Motoren pro Zylinder vier Ventile besitzen, im Bereich eines jeden Zylinders somit acht Spulenanordnungen untergebracht werden müssen. Einer der wichtigsten Gesichtspunkte bei der Konzipierung solcher Spulenanordnungen ist daher, diese so kompakt wie nur irgend möglich zu machen. Daher hat man es mit Spulenträgern versucht, die eine strenge rechteckige Kastenform aufweisen. Die Spulenwicklung derartiger Spulenanordnungen wird üblicherweise mit einer Vergussmasse vergossen. Infolge Temperaturwechselbelastung der Spulenanordnung entstehende Spannungen konzentrieren sich an den Stellen der Vergussmasse, die den scharfkantigen Ecken des Spulenkerns benachbart sind. Dies führt zu unguten Rissen in der Vergussmasse.

Beim Wickeln einer Spulenwicklung gibt es unterschiedliche Wickelmethoden, die zu unterschiedlichen Ergebnissen hinsichtlich der Kompaktheit der Spulenwicklung und der Flexibilität hinsichtlich der Drahtzahl einer jeden Wicklungslage führen. Bei einer ungeordneten oder wirren Wickelmethode liegen die Wickeldrahtlagen ungeordnet in dem Wickelraum, der beispielsweise zwischen einem mittleren Schenkel und den beiden Außenschenkeln eines E-förmigen Blechpakets gebildet wird. Damit lässt sich weder eine besonders kompakte Spulenwicklung erreichen noch lässt sich eine optimale Bauhöhe der Spulenwicklung erzielen. Unter diesen Aspekten bessere Ergebnisse erhält man mit einer orthozyklischen Wickelmethode, die zu einer höheren Kompaktheit als die wirre Wickelmethode führt, jedoch hinsichtlich der erzielbaren Bauhöhe und der Flexibilität in der Wahl der Wicklungszahl der Spulenwicklung noch Wünsche offenläßt.

Zur elektrischen Verbindung des Spulendrahtes mit einem Steuergerät werden herkömmlicher Weise Kabel häufig eingesetzt. Diese haben verschiedene Nachteile bezüglich Haltbarkeit, automatisierbarer Montage, Festigkeit und Dichtheit. Solche Nachteile lassen sich verringern durch die Verwendung von gestanzten Leitermetallstreifen (in der Fachwelt auch Leadframes genannt), die mit isolierendem Kunststoff umspritzt werden. Zur Kontaktierung der Spulendrähte werden üblicherweise Lötverbindungen, Crimp-Verbindungen oder ähnliche Verbindungen eingesetzt. Diese haben Schwächen in der Haltbarkeit und im Übergangswiderstand der elektrischen Verbindung.

Bisher wurden nach dem Wickeln der Spule auf der Außenseite der Spulenwicklung positioniert, und die Leitermetallstreifen mit einem Spulenträger mechanisch verbunden und wurden die Spulendrahtenden mit den Leitermetallstreifen kontaktiert. Dies führt dazu, dass im Außenbereich der Spule über die Abmessungen der Spulenwicklung hinaus Bauraum benötigt wird, was dem Streben nach höchstmöglicher Kompaktheit von Spulen, die beispielsweise als Aktorspulen für die Betätigung von Verbrennungsmotorventilen dienen sollen, entgegensteht. Zusätzlich ergibt sich nur eine geringe Festigkeit der Verbindung von Leitermetallstreifen und Spulenträger.

Bei herkömmlichen Lösungen müssen bedingt durch die Montageanforderungen die Leitermetallstreifen zur Seite gebogen werden können, damit die Montage der beiden Aktorhälften, die für die Steuerung eines Verbrennungsmotorventils benötigt werden, mit den eingesetzten Ventil- oder Ankerschäften möglich ist. Zur Erreichung einer möglichst kompakten Montageeinheit ist dabei ein starkes Verbiegen der Leitermetallstreifen erforderlich. Dies kann zu einer unerwünschten plastischen Verformung der Leitermetallstreifen führen.

Die geschilderten Probleme herkömmlicher Lösungen werden unter verschiedenen Aspekten der vorliegenden Erfindung überwunden.

Unter einem ersten Aspekt macht die Erfindung eine elektrische Spulenanordung gemäß Patentanspruch 1 verfügbar. Aufgrund der Maßnahme, den Außenumfang des Spulenträgers an seinen Eckpunkten je mit einem Abrundungselement zu versehen, das sich mindestens über die Vergussmassenfüllhöhe erstreckt und eine im Anspruch 1 spezifizierte außenseitige Rundungskrümmung aufweist, werden von den Eckpunkten des Spulenträgers und damit von den Eckpunkten des Spulenkerns ausgehende Spannungsrisse in der Vergussmasse vermieden.

Unter einem zweiten Aspekt macht die Erfindung eine Spulenanordnung gemäß Anspruch 7 verfügbar, bei welcher die Spulenwicklung homogen gewickelt ist, derart, dass alle in Radialrichtung der Spulenwicklung aufeinanderfolgenden Wickellagen dieselbe Anzahl von in Axialrichtung der Spulenwicklung übereinander liegenden Wickellagen aufweisen. Damit erreicht man nicht nur eine besonders kompakte Bauhöhe der Spulenwicklung sondern erhält man auch eine höhere Flexibilität hinsichtlich der wählbaren Wicklungszahl.

Unter einem dritten Aspekt macht die Erfindung eine Spulenanordnung gemäß Anspruch 8 verfügbar, bei welcher die Spulendrahtenden je mit einem Leitermetallstreifen verbunden sind, dessen beide Enden mit Anschlusselementen integriert sind, nämlich einen Endes einstückig mit einem Spulendrahtverbinder und anderen Endes mit einem Steckkontakt für eine Steckverbindung mit einem externen Steckverbinder. Dabei ist der Leitermetallstreifen mit Ausnahme der beiden Endes integrierten Anschlusselemente mit einem isolierenden Kunststoff umspritzt.

Nach einem vierten Aspekt der Erfindung gemäß Anspruch 9 ist der Leitermetallstreifen mit dem Kunststoff des Spulenträgers umspritzt, so dass eine stabile, dauerhafte und wohldefinierte relative Lage zwischen Spulenträger und Leitermetallstreifen sichergestellt ist. Dies führt zu einer Verbesserung der Maßhaltigkeit.

Gemäß Anspruch 10 kann man den Leitermetallstreifen mit einer Innenseite des Spulenträgers verspritzen, wodurch der Bauraumbedarf am Außenbereich der Spule geringer wird, was der gewünschten Kompaktheit der Spulenanordnung zugute kommt.

Gemäß Anspruch 15 macht die Erfindung ein Verfahren zum Umspritzen eines Leitermetallstreifens verfügbar, bei welchem der Leiterstreifen während des Vorgangs des Umspritzens mit Kunststoff mittels gefederter Stützkerne in seiner Position gehalten wird, damit der Spritzdruck ihn nicht verbiegen kann, wobei die federnd gehaltenen Stützkerne unter dem Spritzdruck oder durch gesteigerte Bewegung soweit zurückweichen können, dass der Leitermetallstreifen auch an den Stellen mit Kunststoff umspritzt wird, an denen die Stützkerne angreifen.

Weitere Aspekte der Erfindung sowie Weiterbildungen und Ausführungsformen sind den weiteren abhängigen Ansprüchen entnehmbar.

Die oben erläuterten und weitere einzelne Aspekte der Erfindung, nämlich die Verhinderung von Spannungsrissen in der Vergussmasse mittels Abrundungselementen, die Verwendung einer hochreaktiven, schnell aushärtenden Vergussmasse, die Verwendung gestanzter und mit Kunststoff umwickelter Leitermetallstreifen mit integrierten Anschlusselementen, das Einspritzen der Leitermetallstreifen in den Kunststoff des Spulenträgers, das Einspritzen des Leitermetallstreifens an der Innenseite des Spulenträgers, das Heißverstemmen des freien Spulendrahtendes mit dem zugehörigen Anschlusselement des Leitermetallstreifens und das Vorsehen einer Vergussmassendichtung am Leitermetallstreifen, sind erfinderisch nicht nur in Kombination sondern sind auch erfinderisch je für sich unabhängig von den anderen Aspekten

Die Erfindung wird nun anhand von Ausführungsformen näher erläutert. In den Zeichnungen zeigen:
Figur 1 eine Draufsicht von oben auf eine verbesserungswürdige Spulenanordnung, bei welcher die Gefahr von Rissbildung in der Vergussmasse besteht;
Figur 2 eine Draufsicht auf eine Ausführungsform einer erfindungsgemäßen Spulenanordnung mit Maßnahmen zur Vermeidung derartiger Risse in der Vergussmasse;
Figur 3 eine Schnittansicht gemäß Schnittlinie III-III in Figur 2;
Figur 4 Darstellungen von Spulenwickeln, die man mit der herkömmlichen orthozyklischen Wickelmethode bzw. der herkömmlichen wirren Wickelmethode erhält;
Figur 5 eine Darstellung eines Spulenwickels, den man mit der erfindungsgemäßen homogenen Wickelmethode erhält;
Figur 6 eine Darstellung einer herkömmlichen Methode des elektrischen Verbindens der Spulendrahtenden mittels je eines Anschlusskabels;
Figur 7 eine erfindungsgemäße Methode zum Anschließen der Spulendrahtenden;
Figur 8 eine Darstellung, teilweise in Schnittansicht, einer Spuleneinheit mit einer auf einen Spulenträger gewickelten Spule und einem mit dem Spulenträger verspritzen Leitermetallstreifen;
Figur 9 die in Figur 8 gezeigte Spuleneinheit eingesetzt in ein Aktorgehäuse; und
Figur 10 eine Darstellung, wie ein erfindungsgemäßer Leitermetallstreifen während des Umspritzens mit Kunststoff in der gewünschten Position gehalten wird.

Alle Zeichnungen der genannten Figuren sind schematisiert und erheben keinen Anspruch auf Maßstabsgerechtigkeit.

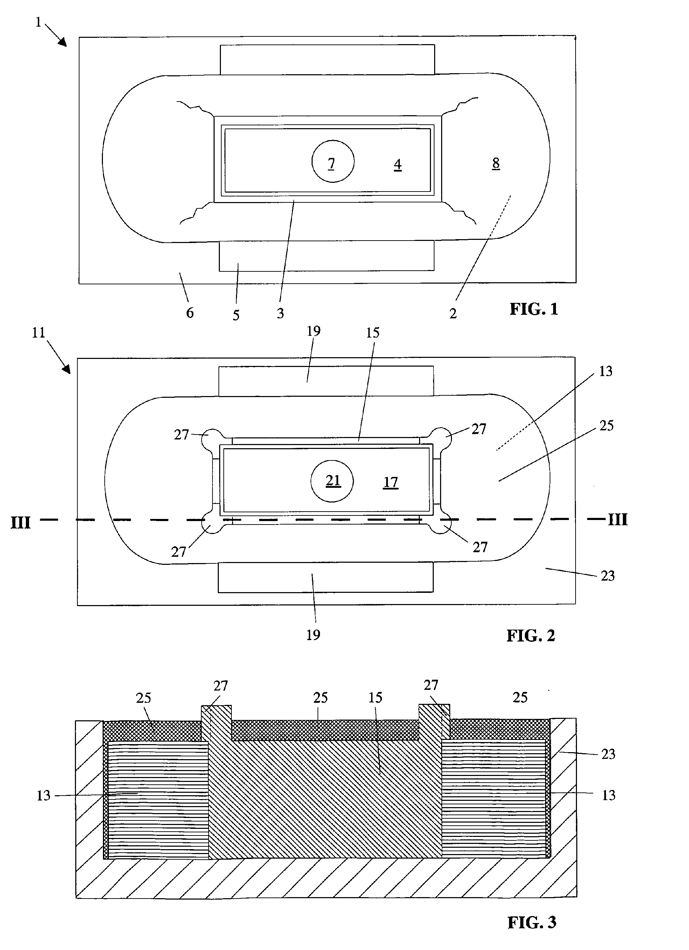

Anhand von Figur 1 wird zunächst eine verbesserungswürdige Lösung für eine Spulenanordnung betrachtet. Diese Spulenanordnung umfasst eine Spulenwicklung 2, welche auf den Aussenumfang eines rechteckkastenförmigen Spulenträgers 2 gewickelt, und in dessen Innenraum ein Spulenkern 4 angeordnet ist. Der Spulenkern 4 ist Teil, nämlich Mittelschenkel, eines Blechpaketes 5, welches einen E-förmigen Querschnitt aufweist, dessen Mittelschenkel den Spulenkern 4 bildet und dessen Außenschenkel sich außerhalb der Längsseiten der Spulenwicklung 2 befinden. Diese Spulenanordnung ist in eine Aufnahmemulde eines Spulengehäuses 6 eingesetzt. In der Mitte des Spulenkerns 4 befindet sich ein Durchgangsloch 7 für den mit der Spulenanordnung zu betätigenden Ventilschaft. Die Aufnahmemulde weist eine derartige Tiefe auf, dass die Spuleneinheit mit der Spulenwicklung 2 und dem Spulenträger 3 bis unter die obere Oberfläche des Spulengehäuses 6 eintaucht. Der in der Aufnahmemulde oberhalb der Spuleneinheit 2, 3 verbleibende Freiraum ist mit einer Vergussmasse 8 gefüllt, welche die Spulenwicklung 2 abdeckt. Wie in Figur 1 angedeutet ist, neigt die Vergussmasse bei dieser Geometrie des Spulenträgers 3 zur Rissbildung, ausgehend von den vier Ecken des Spulenträgers. An den Rissen 9 dringt Luft in die Vergussmasse 8 ein, die eine hohe Wärmeleitfähigkeit besitzt und damit die wichtige Fähigkeit, in der Spulenwicklung im Betrieb entstehende Wärme abzuleiten. In Folge der auftretenden Temperaturwechselbelastung der als Aktorspule dienenden Spuleneinheit entstehen in der Vergussmasse 8 Spannungen, die zu den Rissen, ausgehend von Stellen mit besonders hoher Spannungskonzentration, wie an den vier Ecken des Spulenkerns 4, in der Vergussmasse 8 führen können.

Die Probleme mit der spannungsbedingten Rissbildung in der Vergussmasse der in Figur 1 gezeigten Spulenanordnung werden überwunden mit einer erfindungsgemäßen Spulenanordnung 11, wie sie in Figur 2 in Draufsicht und in Figur 3 in Schnittansicht längs einer Schnittlinie III-III der Figur 2 gezeigt ist. In Übereinstimmung mit der in Figur 1 gezeigten Spulenanordnung weist die in den Figuren 2 und 3 gezeigten Spulenanordnung 11 eine Spulenwicklung 13, einen Spulenträger 15, einen Spulenkern 17, ein Blechpaket 19, ein Durchgangsloch 21 in dem Spulenkern 17, ein Spulengehäuse 23 und eine Vergussmasse 25 auf. Im Unterschied zu der in Figur 1 gezeigten Lösung ist bei der in den Figuren 2 und 3 gezeigten erfindungsgemäßen Ausführungsform an den vier Eckpunkten des Spulenträgers 15 je ein Abrundungselement 27 vorgesehen. Dieses erstreckt sich mindestens über die Füllhöhe der Vergussmasse 25 und weist auf seiner Außenseite eine Rundungskrümmung derartiger Größe auf, dass von den Eckpunkten des Spulenträgers 15 ausgehende Spannungsrisse in der Vergussmasse 25 vermieden werden. Da die Funktion der Abrundungselemente 27 nur dort benötigt wird, wo sich Vergussmasse 25 befindet, erstrecken sich bei der in Figur 3 gezeigten Ausführungsform die Abrundungselemente 27 nur in einem in Figur 3 oberen Bereich des Spulenträgers 15. Dabei ist die Höhe der Abrundungselemente 27 derart gewählt, dass sie einerseits mindestens bis zum Grund der Vergussmasse 27 hinabreichen und andererseits mit ihrem oberen Ende aus der Vergussmasse 15 herausstehen.

Aufgrund der Anordnung der Abrundungselemente 27 an den vier Ecken des Spulenträgers 15 gibt es nicht die bei der Lösung gemäß Figur 1 auftretende Spannungskonzentration an den vier Ecken des Spulenträgers. Die bei Temperaturwechselbelastung der Spule in der Vergussmasse 25 entstehenden Spannungen erfahren daher nicht die hohe Spannungskonzentration wie bei der Lösung gemäß Figur 1, wodurch sich Spannungsrisse wie bei Figur 1 vermeiden lassen.

Bei der in Figur 2 dargestellten Ausführungsform weisen die Abrundungselemente 27 Teilkreisform auf. Dies ist die beste Lösung, weil dadurch die beste Spannungsverteilung im Bereich der Ecken des Spulenträgers 15 erreicht wird. Dabei kann der Krümmungsradius der Abrundungselemente 27 in Abhängigkeit von den Bedingungen der jeweiligen praktischen Ausführungsform gewählt werden. Je höher die Temperaturwechselbelastung der Spule und damit der Vergussmasse 23 ist und je geringer die Elastizität der ausgehärteten Vergussmasse 23 ist, umso größer ist der Krümmungsradius der Abrundungselemente 27 zu wählen.

Die Abrundungselemente 27 müssen nicht unbedingt eine teilkreisförmige Kontur haben. Es sind auch andere Rundungskonturen, beispielsweise elliptischer Form denkbar.

Zum Vergießen der Spulenanordnung kann ein automatisches Druckgelierverfahren eingesetzt werden. Damit sind kurze Vergusszeiten erzielbar. Die herkömmlicher Weise verwendeten Vergussmassen benötigen aber zum Aushärten mehrere Stunden, was zu einer erheblichen Beschränkung des Produktionsdurchsatzes bei der Serienherstellung von Spulenanordnungen führt. Erfindungsgemäß wird eine im besonderen Maß reaktive Vergussmasse verwendet, die bei einer erhöhten Vergusstemperatur vergossen wird, wobei innerhalb weniger Minuten, bei Ausführungsbeispielen innerhalb von etwa 1-3 Minuten, bei einer praktischen Ausführungsform innerhalb etwa 2 Minuten, etwa 85% der Aushärtreaktion in der Vergussform stattfindet. Die restliche noch nicht reagierte Vergussmasse kann im Motorbetrieb aushärten, das heißt, wenn die Spulenanordnung als Betätigungsvorrichtung für Verbrennungsmotorventile im Einsatz ist. Dadurch wird die Prozesszeit für das Vergießen und Aushärten der Vergussmasse auf wenige Minuten verkürzt. Dieses Ergebnis erreicht man bei einer Ausführungsform der Erfindung mit einer Zweikomponentenvergussmasse, wobei bei einer praktischen Ausführungsform ein 2-Komponenten-Epoxid-Harz mit Füllstoffen verwendet wird.

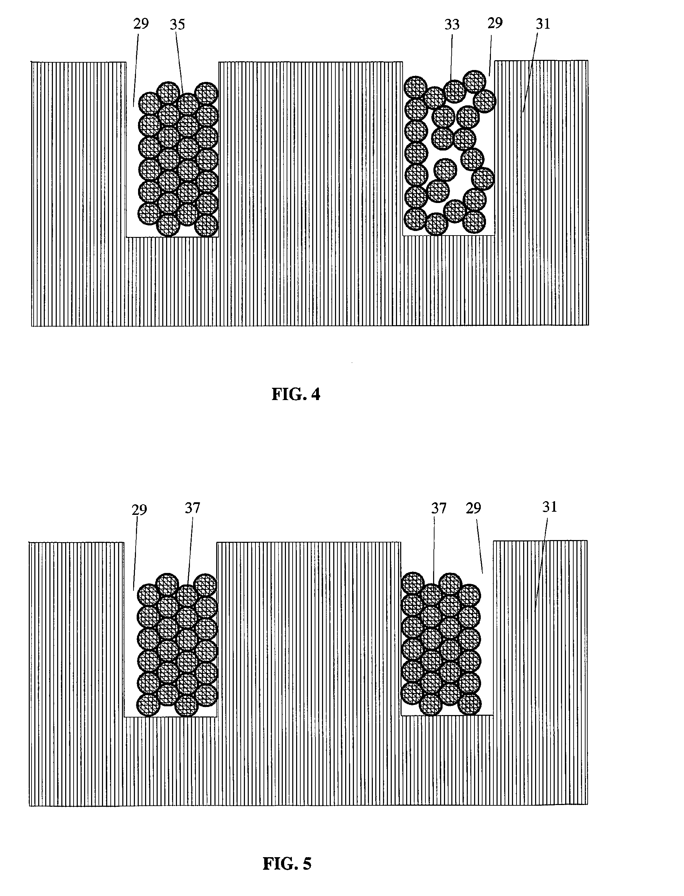

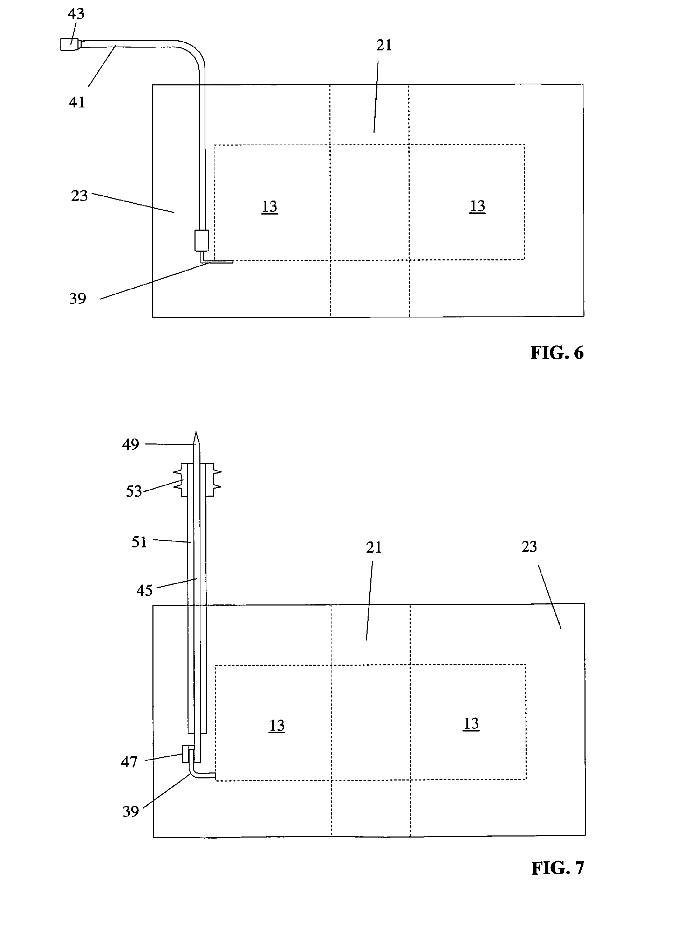

Anhand der Figuren 4 und 5 werden nun unterschiedliche Spulenwickelmethoden erläutert. Dabei ist angenommen, dass der Spulendrahtwickel in Vertiefungen 29 zwischen den Schenkeln eines E-förmigen Blechpaketes 31 eingebracht wird. Figur 4 zeigt zwei herkömmliche Wickel methoden, nämlich einen wirr gewickelten Spulenwickel 33 auf der rechten Seite und einen orthozyklisch gewickelten Spulenwickel 35 auf der linken Seite. Im Fall des wirr gewickelten Spulenwickels 33 besteht keine besondere Ordnung zwischen den einzelnen Drahtlagen, was zu schlechter Voraussagbarkeit des für eine bestimmte Wicklungszahl erforderlichen Raumbedarfs führt. Da bei dieser Wickelmethode relativ viel Zwischenraum zwischen den je benachbarten Drähten auftreten kann, ist diese Wickelmethode auch aus Gründen der Wärmeabfuhr nachteilig.

Die orthozyklische Wickelmethode führt zu einer kompakteren Spulenform. Da aber bei dieser Wickelmethode axial benachbarte Wickellagen eine unterschiedliche Drahtzahl aufweisen (bei dem in Figur 4 gezeigten Beispiel haben axial benachbarte Wickellagen abwechselnd sechs und sieben in Axialrichtung übereinander liegende Drahtlagen), besteht eine Einschränkung hinsichtlich der Wahl der zu realisierenden Windungszahlen.

Die erfindungsgemäß verwendete Wickelmethode ist anhand Figur 5 dargestellt und führt zu einem homogenen Spulenwickel 37. Dieser zeichnet sich dadurch aus, dass alle in radialer Richtung des Spulenwickels aufeinander folgenden Wickellagen eine gleiche Anzahl übereinander liegender Wickeldrähte aufweisen. Möchte man beispielsweise eine Spule mit einer Windungszahl 40 haben, wickelt man einen homogenen Spulenwickel mit vier radialen Wicklungslagen mit je zehn axial übereinanderliegenden Wicklungsdrähten. Mit der orthozyklischen Wickelmethode wäre nur eine Windungszahl entweder von 39 oder 41 möglich. Mit der erfindungsgemäß verwendeten homogenen Wickelmethode erreicht man somit eine höhere Flexibilität hinsichtlich der erreichbaren Windungszahl.

Figur 6 zeigt eine herkömmliche Methode zum Anschließen eines freien Spulendrahtendes 39 an ein Anschlußkabel 41, das an einem von dem Spulendrahtende 39 abliegenden Kabelende mit einem Stecker 43 versehen ist. Derartige Kabelverbindungen haben Nachteile hinsichtlich Haltbarkeit, automatisierbarer Montage, Festigkeit und Dichtigkeit, letzteres unter dem Gesichtspunkt, dass sich eine Spulenanordnung für die Betätigung eines Verbrennungsmotor-Ventils in einem Raum befindet, der mit unter Druck stehendem Öl beaufschlagt ist.

Die erfindungsgemäße Lösung ist in Figur 7 gezeigt und umfasst einen Leitermetallstreifen 45 mit einem integrierten Drahtanschlusselement 47 zum Anschließen des freien Spulendrahtendes 39 mit einem integrierten Steckkontakt 49 an dem vom Drahtanschlusselement 47 abliegenden Ende. Der Leitermetallstreifen 45 ist mit Ausnahme des Drahtanschlusselementes 46 und des Steckkontaktes 49 mit Kunststoff 51 umspritzt. Dem Steckkontakt 49 benachbart ist ein Verunreinigungsdichtelement 53 angeordnet, welches den Leitermetallstreifen 45 bzw. den Kunststoff 51 umschließt und gegen das Eindringen beispielsweise von Öl zur Spulenwicklung 13 hin abdichtet.

Das Verbinden des freien Spulendrahtendes 39 mit dem Leitermetallstreifen 45 erfolgt vorzugsweise durch Heiß-Verstemmen, aus dem englischsprachigen Raum unter dem Begriff "Hot-Stacking" bekannt. Zu diesem Zweck ist das Drahtanschlusselement 47 U-förmig ausgebildet, wobei das Spulendrahtende 39 in einen zwischen den beiden U-Schenkeln gebildeten Nutgrund eingelegt und an die Außenseiten der beiden U-Schenkel je eine elektrische Elektrode angelegt wird. Zunächst wird zwischen den beiden Elektroden ein Strom erzeugt, der ausreicht, um den Isolierlack zu verbrennen, mit dem Spulendraht üblicherweise beschichtet ist. Danach wird ein Strom zwischen den beiden Elektroden erzeugt, der zu einem Verschweißen des von dem Isolierlack befreiten Spulendrahtendes mit dem U-förmigen Drahtanschlusselement 47 führt.

Das zu der Gruppe der Fügeverfahren gehörende Hot-Stacking-Verfahren zeichnet sich durch Vorteile wie geringer Übergangswiderstand der Verbindung, gute Automatisierbarkeit, hohe Temperaturbeständigkeit und Wegfall des Erfordernisses eines Zusatzwerkstoffs für die Fügeverbindung aus.

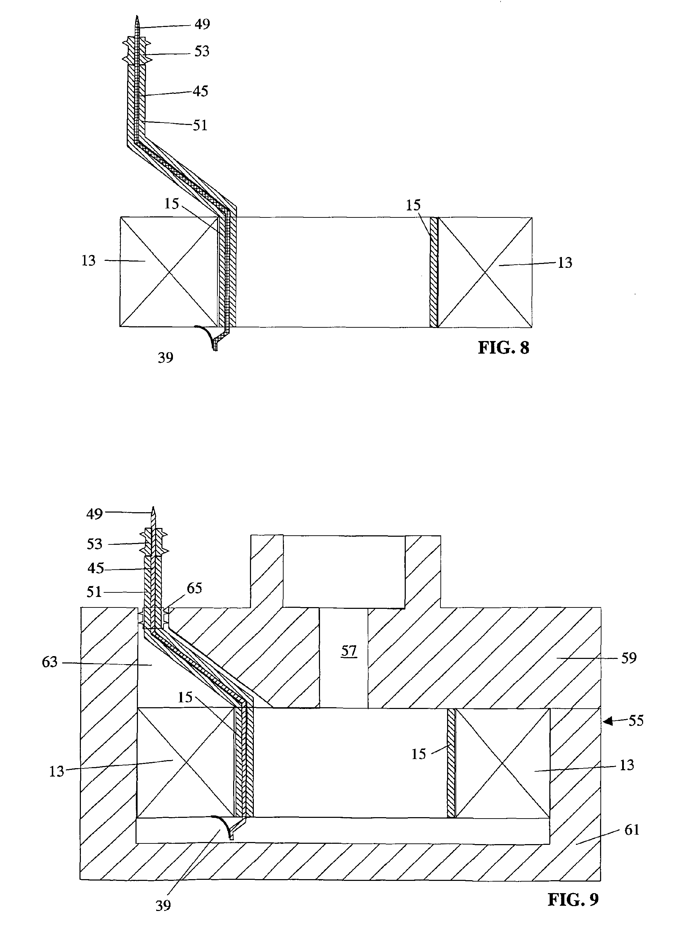

Die Figuren 8 und 9 zeigen eine Ausführungsform der Erfindung, bei welcher der Leitermetallstreifen 45 einerseits an der Innenseite des Spulenträgers 15 mit dem Kunststoff des Spulenträgers 15 verspritzt ist und andererseits der aus dem Spulenträger 15 herausragende Teil des Leitermetallstreifens 45 zur radialen Außenseite der Spulenwicklung 13 hin abgewinkelt ist. Durch das Verspritzen des Kunststoffs 51 des Leitermetallstreifens 45 mit dem Kunststoff des Spulenträgers 15 erreicht man eine sehr steife Verbindung zwischen dem Leitermetallstreifen 45 und dem Spulenträger 15, was zu einer Verbesserung der Maßhaltigkeit führt. Dadurch, dass der mit dem Spulendrahtende 39 verbundene untere Bereich des Leitermetallstreifens 45 auf der Innenseite des Spulenträgers 15 angeordnet ist und nicht auf der Außenseite der Spulenwicklung 13, wie dies herkömmlicher Weise der Fall ist, gewinnt man am Außenbereich der Spulenanordnung mehr Bauraum. Durch eine doppelte Abwinklung des Leitermetallstreifens 45, wie sie in Figur 8 gezeigt ist, kann trotz des Einspritzens des Leitermetallstreifens 45 in den Kunststoff auf der Innenseite des Spulenträgers 15 eine Steckverbindung zwischen dem Steckkontakt 49 und einem am üblichen Ort befindlichen Gegensteckverbinder problemlos hergestellt werden.

Bedingt durch die Einbauanforderungen müssen die Leitmetallstreifen 45 zur Seite gebogen werden können, damit die Montage der Aktorhälften (je durch eine Spulenanordnung gebildet) mit den eingesetzten Ventilschäften oder Ankerschäften möglich ist. Zum Erreichen eines möglichst kompakten Aufbaus ist dabei ein starkes Verbiegen der Leitermetallstreifen 45 erforderlich. Dies kann zu deren plastischer Verformung führen. Dadurch, dass erfindungsgemäß die Leitermetallstreifen 45 abgewinkelt sind, und zwar beispielsweise mit 45°, ist kein oder nur ein geringes Verbiegen der Leitermetallstreifen 45 bei der Montage erforderlich. Eine plastische Verformung der Leitermetallstreifen 45 bei der Aktormontage wird auf diese Weise vermieden oder mindestens stark reduziert.

Figur 9 zeigt die in Figur 8 dargestellte Baueinheit eingesetzt in ein Aktorgehäuse 55, das mit einer Durchgangsöffnung 57 für den Ventil- oder Ankerschaft (nicht dargestellt) versehen ist, die mit dem Durchgangsloch 21 des (in Figur 9 nicht gezeigten) Spulenkerns 17 fluchtet. Zwischen einem Gehäuseoberteil 59 und einem Gehäuseunterteil 61 ist eine Passage 63 gebildet, durch welche der über den Spulenträger 15 hochstehende, abgewinkelte Bereich des mit Kunststoff 51 umspritzten Leitermetallstreifens 45 hindurchgeführt ist. An dem in Figur 9 oberen Ende der Passage 63 ist der Leitermetallstreifen 45 mit einer Vergussmassendichtung 65 versehen, welche die Passage 63 gegen die Außenseite des Gehäuseoberteils 59 hin abdichtet. Zum Vergießen der Spulenanordnung mit der (in dieser Figur nicht gezeigten) Vergussmasse 25 wird die Anordnung gemäß Figur 9 gegenüber der Darstellung in dieser Figur auf den Kopf gestellt, so dass der Steckkontakt 49 des Leitermetallstreifens 45 nach unten weist. In dem Bodenbereich des Gehäuseunterteils 61 befindet sich eine (nicht dargestellte) Eingussöffnung, durch welche hindurch die Vergussmasse eingefüllt wird. Beim Vergießen von Vergussmasse mittels eines Vakuumvergussverfahrens ist eine Abdichtung auf den Innenseiten des Aktuatorgehäuses 55 nicht erforderlich. Bei einem automatischen Druckgelierverfahren hat diese Abdichtung die Werkzeugform zu leisten. Die dann noch verbleibende Undichtigkeit an dem oberen Ende der Passage 63 wird mittels der Vergussmassendichtung 65 abgedichtet.

Dadurch dass der Leitermetallstreifen 45 bei der in Figur 9 gezeigten Ausführungsform sowohl mit dem Verunreinigungsdichtelement 53 als auch mit dem Vergussmassendichtelement 65 versehen ist, wird sowohl Öldichtheit des Leitermetallstreifens 45 als auch ein vergussmassendichter Abschluss am (in Figur 9) oberen Ende der Passage 63 erreicht.

Die Verwendung von Leitermetallstreifen 45 oder Lead Frames bringt Vorteile mit sich wie besondere Haltbarkeit, automatisierbare Montage, Festigkeit und Dichtheit.

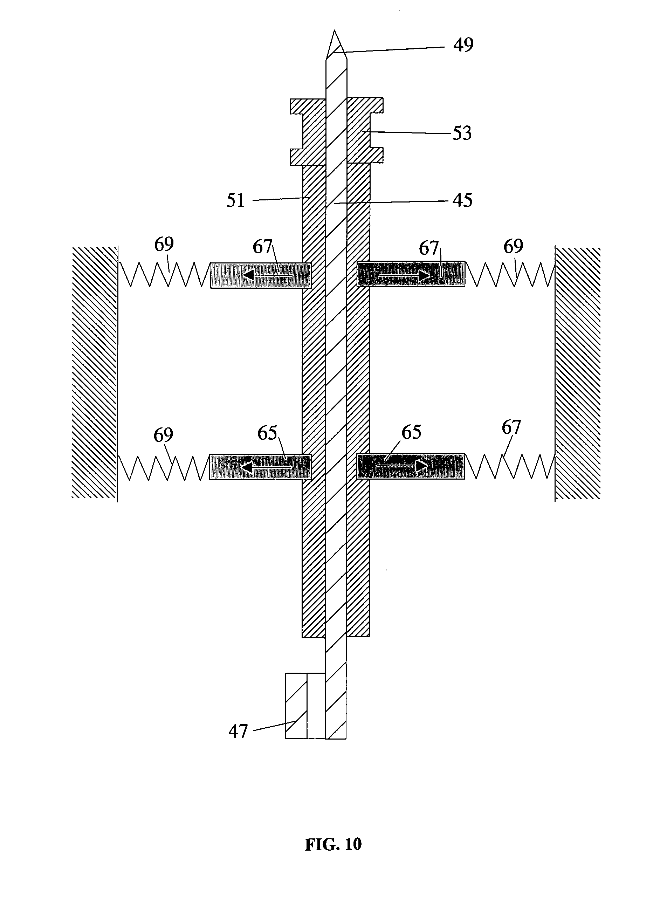

Anhand von Figur 10 wird nun noch ein erfindungsgemäßes Verfahren zum Umspritzen eines Leitermetallstreifens 45 mit Kunststoff 51 erläutert.

Damit der Leitermetallstreifen 45, der bei den geringen Abmessungen kompakter Spulenanordnungen für Verbrennungsmotor-Ventilbetätigungsvorrichtungen keine allzu große Eigensteifigkeit aufweist, beim Umspritzen mit Kunststoff dem Spritzdruck nicht ausweichen und sich dadurch verbiegen kann, was zu ungleicher Dicke des umspritzten Kunststoffs 51 entlang des Leitermetallstreifens 45 führen könnte, werden an den zu umspritzenden Leiterstreifen 45 an vorbestimmten axialen Stellen Stützkerne 67 angesetzt, die den Leiterstreifen 45 während des Anspritzvorgangs abstützen. Bei herkömmlichen Verfahren waren die Stützkerne 67 unbeweglich, mit der Folge, dass an den Angreifpunkten der Stützkerne 67 der Leitermetallstreifen nicht mit Kunststoff umspritzt worden ist. Dem musste man dadurch begegnen, dass man entweder die dadurch hervorgerufenen Kunststofffehlstellen anschließend mit einem Kunststoff oder Klebstoff zugeklebt hat oder dass man vor Beginn des Spritzvorgangs auf den Leitermetallstreifen 45 dort, wo danach die Stützkerne 67 angreifen, schon Kunststoff aufgebracht hat. Dies erhöht nicht nur den Herstellungsaufwand erheblich sondern schafft auch Inhomogenitäten in der Kunststoffumhüllung 51, die beispielsweise zu Undichtigkeiten an diesen Stellen führen können und zu Spannungsdurchschlägen.

Diese Probleme werden bei dem erfindungsgemäßen Verfahren mit einer Vorrichtung gemäß Figur 10 überwunden, indem die Stützkerne 67 mittels Federn 69 vorgespannt werden, die sich an einer Gehäusewand der Spritzform abstützen. Die Vorspannkraft der Federn 69 ist derart gewählt, dass einerseits der Leitermetallstreifen 45 unter dem Spritzdruck nicht ausweicht und sich seitlich verbiegt. Andererseits kann man die Vorspannkraft der Federn 69 derart wählen, dass die Stützkerne von dem anströmenden Kunststoff gegen die Vorspannkraft der Federn 69 derart zurückgedrängt werden, dass an die Leitermetallstreifen 45 auch an den Angreifstellen der Stützkerne 67 Kunststoff angespritzt wird. Es besteht auch die Möglichkeit, die Bewegung der Stützkerne 67 gegen die Vorspannkraft der Federn 69 derart zu steuern, dass sie allmählich zurückgezogen werden und dadurch der Leitermetallstreifen 45 auch an den Angreifstellen der Stützkerne 67 mit Kunststoff umspritzt werden kann. Diese Steuerung der Stützkerne kann mittels einer hydraulischen Stellvorrichtung vorgenommen werden.

Dadurch, dass der Leitermetallstreifen 45 während des Anspritzvorgangs gestützt und damit an einem Durchbiegen gehindert wird, wird vermieden, dass es während des Umspritzvorgangs zu einer ungleichmäßigen Wandstärke des Kunststoffs kommt, was die Gefahr eines Spannungsdurchschlages und von Undichtigkeiten gegenüber Öl erhöhen würde. Dadurch, dass bei dem erfindungsgemäßen Verfahren der Leitermetallstreifen 45 von den Stützkernen 67 nicht nur abgestützt wird sondern dass diese beim Umspritzen aufgrund der federnden Lagerung zurückbewegt werden können, erfolgt ein Umspritzen mit Kunststoff auch an den Angreifstellen der Stützkerne 67. Die Folge ist eine homogene Umspritzung des Leitermetallstreifens 45 über die gesamt Umspritzungslänge, so dass die Gefahr von Spannungsdurchschlägen und von Eindringen von Öl beseitigt ist.

## Patentansprüche

1. Elektrische Spulenanordnung aufweisend:
eine Spuleneinheit mit einem in seiner Grundform rechteckkastenförmigen Spulenträger und mit einer auf dem Außenumfang des Spulenträgers (15) befindlichen Spulenwicklung (13);
ein Spulengehäuse (23; 59) mit einer Aufnahmemulde, welche die Spuleneinheit in solcher Tiefe aufnimmt, dass zwischen einer Oberseite der Aufnahmenmulde und einer Oberseite der Spulenwicklung (13) ein Freiraum bleibt;
und eine Vergussmasse (25), welche den Freiraum mindestens bis zu einer solchen Füllhöhe ausfüllt, dass die Oberseite der Spulenwicklung (13) mit Vergussmasse (25) bedeckt ist;
wobei der Außenumfang des Spulenträgers (15) an seinen Eckpunkten je mit einem Abrundungselement (27) versehen ist, das sich mindestens über die Vergussmassenfüllhöhe erstreckt und eine außenseitige Rundungskrümmung solcher Größe aufweist, dass von den Eckpunkten des Spulenträgers (15) ausgehende Spannungsrisse in der Vergussmasse (25) vermieden werden.

2. Spulenanordnung nach Anspruch 1, dessen Spuleneinheit einen im Innenraum des Spulenträgers (15) angeordneten Spulenkern (17) aufweist, dessen Oberseite wie die Oberseite der Spulenwicklung (13) von der Vergussmasse (25) bedeckt ist, wobei Oberkanten von Seitenwände des Spulenträgers (15) in die Vergussmasse (25) eingetaucht sind und nur die Abrundungselemente (27) über die Vergussmassenoberfläche hinaus ragen.

3. Spulenanordnung nach Anspruch 1 oder 2, bei welcher die Vergussmasse (25) einen zwischen dem Außenumfang des Spulenträgers (15) und der Spulenwicklung (13) befindlichen Spalt ausfüllt.

4. Spulenanordnung nach Anspruch 2 oder 3, bei welcher die Vergussmasse (25) einen zwischen dem Innenumfang des Spulenträgers (15) und dem Spulenkern (17) befindlichen Spalt ausfüllt.

5. Spulenanordnung nach einem der Ansprüche 1 bis 4, bei welcher die Vergussmasse (25) zwischen einzelnen Spulendrahtlagen bestehende Zwischenräume ausfüllt.

6. Spulenanordnung nach einem der Ansprüche 1 bis 4, mit einer hochreaktiven Vergussmasse (25), die in wenigen Minuten einen Aushärtungsgrad von mindestens 80 % erreicht.

7. Spulenanordnung nach Anspruch 6, mit einer Vergussmasse in Form eines 2-Komponenten-Epoxid-Harzes mit Füllstoffen.

8. Spulenanordnung mit einem Spulenträger (15) und mit einer auf dem Außenumfang des Spulenträgers (15) befindliche Spulenwicklung (13), insbesondere nach einem der Ansprüche 1 bis 6, bei welcher die Spulenwicklung (13) homogen gewickelt ist, derart, dass alle in Radialrichtung der Spulenwicklung (13) aufeinander folgenden Wickellagen dieselbe Anzahl von in Axialrichtung der Spulenwicklung (13) übereinander liegenden Wickellagen aufweisen.

9. Spulenanordnung mit einem Spulenträger (15) und mit einer auf dem Außenumfang des Spulenträgers (15) befindliche Spulenwicklung (13), insbesondere nach einem der Ansprüche 1 bis 7, mit einem gestanzten Leitermetallstreifen (45), der mit Ausnahme zweier Anschlussenden, von denen ein inneres Anschlussende für einen Anschluss des Spulenwicklungsdrahtes (39) und ein äußeres Anschlussende als Steckkontakt (49) für eine Steckverbindung mit einem externen Verbinder vorgesehen ist, mit isolierendem Kunststoff (51) umspritzt ist.

10. Spulenanordnung nach Anspruch 8, mit einem aus Kunststoff gespritzten Spulenträger (15), wobei der Leitermetallstreifen (45) mit dem Kunststoff des Spulenträgers (15) mit verspritzt ist.

11. Spulenanordnung nach Anspruch 9, bei welchem der Leitermetallstreifen (45) an eine Innenseite des Spulenträgers (15) angespritzt ist.

12. Spulenanordnung nach Anspruch 10, bei welchem ein vom Spulenträger (15) hochstehender erster Bereich des Leitermetallstreifens (45) zunächst zur Außenseite des Spulenträgers (15) hin in einen Schrägbereich abgewinkelt ist und in einem sich daran anschließenden, in Axialrichtung des Spulenträgers (15) verlaufenden äußeren Endbereich endet.

13. Spulenanordnung nach einem der Ansprüche 8 bis 11, bei welchem der Leitermetallstreifen (45) in einem seinem äußeren Anschlussende (49) benachbarten Bereich mit einem den Leitermetallstreifen (45) umgebenden Verunreinigungsdichtelement (53) versehen ist.

14. Spulenanordnung nach einem der Ansprüche 8 bis 12, bei welchem das freie Spulendrahtende (39) mit dem inneren Anschlussende (47) des Leitermetallstreifens (45) mittels Heißverstemmens vebunden ist.

15. Spulenanordnung nach einem der Ansprüche 8 bis 13, mit einer Spuleneinheit mit einem Spulenträger (15) und einer auf dem Außenumfang des Spulenträgers (15) befindlichen Spulenwicklung (13), mit einem Spulengehäuse (23; 55) mit einer Aufnahmemulde, welche die Spuleneinheit in solcher Tiefe aufnimmt, dass zwischen einer Oberseite der Aufnahmemulde und einer Oberseite der Spulenwicklung (13) ein Freiraum bleibt, und mit einer Vergussmasse (25), welche den Freiraum mindestens bis zu einer solchen Füllhöhe ausfüllt, dass die Oberseite der Spulenwicklung (13) mit Vergussmasse (25) bedeckt ist,
wobei der Leitermetallstreifen (45) durch eine zwischen der Spuleneinheit und dem Spulengehäuse (23; 59) gebildete Passage (63) geführt ist und ein in der Passage (63) befindlicher Bereich des Leitermetallstreifens (45) von einer Vergussmassendichtung (65) umgeben ist, welche die Passage gegen das Hindurchdringen von beim Vergießen flüssiger Vergussmasse (25) verschließt.

16. Verfahren zum Umspritzen eines Leitermetallstreifens (45), insbesondere nach einem der Ansprüche 8 bis 14, mit isolierendem Kunststoff (51), bei welchem der Leitermetallstreifen (45) während des Spritzvorgangs in einer Spritzform an mindestens einer axialen Stelle von beiden Seiten her mittels je einem Stützkern (67) in Stellung gehalten wird und jede Stütznadel mittels einer Vorspannfeder (69) zum Leitermetallstreifen (45) hin federnd vorgespannt wird, mit solcher Federkraft, dass einerseits der Leitermetallstreifen (45) dem Anströmdruck des Kunststoffs nicht ausweicht und andererseits die Stützkerne (67) von dem anströmenden Kunststoff gegen die Vorspannkraft der Vorspannfedern derart zurück bewegbar sind, dass an den Leitermetallstreifen (45) auch an den Stellen, an welchen die Stützkerne (67) angreifen, Kunststoff (51) angespritzt wird.

17. Verfahren nach Anspruch 15, bei welchem die Bewegung der Stützkerne (67) gesteuert wird.

18. Verfahren nach Anspruch 16, bei welchem die Bewegung der Stützkerne (67) mittels einer hydraulischen Stellvorrichtung gesteuert wird.
